# EUROPEAN PATENT APPLICATION

(11) **EP 4 557 624 A1**
(43) Date of publication of application: **21.05.2025**
(21) Application number: 23839996.8
(22) Date of filing: 13.07.2023
(51) Int. Cl.: H04B 7/0408, H04B 7/06, H04B 7/0417, H04B 7/0404, H04W 24/08, G06N 20/00

(54) **METHOD AND APPARATUS FOR BEAM REPORTING IN WIRELESS COMMUNICATION SYSTEM**

(30) Priority: 15.07.2022 KR 20220087661
(71) Applicant: LG Electronics Inc., Yeongdeungpo-gu Seoul 07336 (KR)
(72) Inventor: KANG, Jiwon, Seoul 06772 (KR); KIM, Hyungtae, Seoul 06772 (KR); PARK, Haewook, Seoul 06772 (KR); GO, Seongwon, Seoul 06772 (KR)
(74) Representative: Plasseraud IP
(86) International application number: PCT/KR2023/010034
(87) International publication number: WO 2024/014905

(57) **Abstract**

There is provided a method performed by a user equipment in a wireless communication system. The method includes receiving configuration information related to channel state information (CSI), receiving at least one downlink reference signal (DL RS), calculating the CSI based on a measurement for the at least one DL RS, and reporting the CSI. The configuration information includes information related to a first set of beams. The at least one DL RS is based on first DL RSs related to the first set of beams. The CSI includes information related to at least one beam in a second set related to the first set.

## Description

### [TECHNICAL FIELD]

The present disclosure relates to a method and device for beam reporting in a wireless communication system.

### [BACKGROUND]

A mobile communication system has been developed to provide a voice service while ensuring the activity of a user. However, the area of the mobile communication system has extended to a data service in addition to a voice. Due to the current explosive increase in traffic, there is a shortage of resources, and thus users demand a higher speed service. Accordingly, there is a need for a more advanced mobile communication system.

Requirements for a next-generation mobile communication system need to be able to support the accommodation of explosive data traffic, a dramatic increase in the data rate per user, the accommodation of a significant increase in the number of connected devices, very low end-to-end latency, and high-energy efficiency. To this end, various technologies, such as dual connectivity, massive multiple input multiple output (MIMO), in-band full duplex, non-orthogonal multiple access (NOMA), super wideband support, and device networking, are researched.

In relation to beam management, Set A and Set B are defined. Specifically, according to BM-Casel, a UE estimates/determines beams of the Set A (e.g., preferred beam(s) among the beams of the Set A) based on measurement for beams of the Set B (e.g., measurement of RSs related to the beams of the Set B).

### [DISCLOSURE]

### [TECHNICAL PROBLEM]

According to an existing beam measurement and reporting method, a UE measures and reports the received power or quality without knowing information of respective beams (e.g., absolute/relative beam angle, beam shape, etc.). In the existing method, because the information given to the UE is limited, it may be difficult to perform beam prediction based on the above-described BM-Casel, or the accuracy of the beam prediction may be low.

An object of the present disclosure is to provide a method of supporting a beam estimation/prediction operation based on the above-described BM-Casel.

The technical objects of the present disclosure are not limited to the aforementioned technical objects, and other technical objects, which are not mentioned above, will be apparently appreciated by a person having ordinary skill in the art from the following description.

### [TECHNICAL SOLUTION]

A method performed by a user equipment in a wireless communication system according to an embodiment of the present disclosure comprises receiving configuration information related to channel state information (CSI), receiving at least one downlink reference signal (DL RS), calculating the CSI based on a measurement for the at least one DL RS, and reporting the CSI.

The configuration information includes information related to a first set of beams. The at least one DL RS is based on first DL RSs related to the first set of beams. The CSI includes information related to at least one beam in a second set related to the first set.

Second DL RSs related to the second set of beams may include the first DL RSs.

Second DL RSs related to the second set of beams may be different from the first DL RSs.

A beam width related to the second set of beams may be narrower than a beam width related to the first set of beams.

A quasi co-location (QCL) relationship may be configured between the second DL RSs and the first DL RSs.

The configuration information may include angle information related to the first set of beams.

The CSI may include information for at least one of i) one or more first DL RSs of the first DL RSs, ii) one or more linear combination coefficients related to the one or more first DL RSs, and/or iii) one or more beam quality values related to the one or more first DL RSs.

The configuration information may include coordinate information related to the first set of beams. The coordinate information may include coordinates of the first DL RSs within a beam grid.

Second DL RSs related to the second set of beams may be related to beams that are able to be represented based on the beam grid.

The CSI may include information for at least one of i) one or more coordinates related to one or more second DL RSs of the second DL RSs and/or ii) one or more beam quality values related to the one or more second DL RSs.

In the CSI, a payload size for each of the one or more second DL RSs may be different. The payload size for each of the one or more second DL RSs may be related to a coordinate range determined based on an order of the one or more beam quality values.

A coordinate range determined for a specific second DL RS among the one or more second DL RSs may be i) an entire coordinate range of the beam grid or ii) a range determined based on a coordinate related to a second DL RS that is prior to the specific second DL RS in the order of the one or more beam quality values.

A user equipment operating in a wireless communication system according to another embodiment of the present disclosure comprises one or more transceivers, one or more processors, and one or more memories operably connectable to the one or more processors and storing instructions that configure the one or more processors to perform operations based on being executed by the one or more processors.

The operations comprise receiving configuration information related to channel state information (CSI), receiving at least one downlink reference signal (DL RS), calculating the CSI based on a measurement for the at least one DL RS, and reporting the CSI.

The configuration information includes information related to a first set of beams. The at least one DL RS is based on first DL RSs related to the first set of beams. The CSI includes information related to at least one beam in a second set related to the first set.

A device according to another embodiment of the present disclosure comprises one or more memories, and one or more processors operably connected to the one or more memories. The one or more memories include instructions that configure the one or more processors to perform operations based on being executed by the one or more processors.

The operations comprise receiving configuration information related to channel state information (CSI), receiving at least one downlink reference signal (DL RS), calculating the CSI based on a measurement for the at least one DL RS, and reporting the CSI.

The configuration information includes information related to a first set of beams. The at least one DL RS is based on first DL RSs related to the first set of beams. The CSI includes information related to at least one beam in a second set related to the first set.

One or more non-transitory computer readable mediums according to another embodiment of the present disclosure stores one or more instructions. The one or more instructions executable by one or more processors configure the one or more processors to perform operations.

The operations comprise receiving configuration information related to channel state information (CSI), receiving at least one downlink reference signal (DL RS), calculating the CSI based on a measurement for the at least one DL RS, and reporting the CSI.

The configuration information includes information related to a first set of beams. The at least one DL RS is based on first DL RSs related to the first set of beams. The CSI includes information related to at least one beam in a second set related to the first set.

A method performed by a base station in a wireless communication system according to another embodiment of the present disclosure comprises transmitting configuration information related to channel state information (CSI), transmitting at least one downlink reference signal (DL RS), and receiving the CSI.

The CSI is calculated based on a measurement for the at least one DL RS.

The configuration information includes information related to a first set of beams. The at least one DL RS is based on first DL RSs related to the first set of beams. The CSI includes information related to at least one beam in a second set related to the first set.

A base station operating in a wireless communication system according to another embodiment of the present disclosure comprises one or more transceivers, one or more processors, and one or more memories operably connectable to the one or more processors and storing instructions that configure the one or more processors to perform operations based on being executed by the one or more processors.

The operations comprise transmitting configuration information related to channel state information (CSI), transmitting at least one downlink reference signal (DL RS), and receiving the CSI.

The CSI is calculated based on a measurement for the at least one DL RS.

The configuration information includes information related to a first set of beams. The at least one DL RS is based on first DL RSs related to the first set of beams. The CSI includes information related to at least one beam in a second set related to the first set.

### [ADVANTAGEOUS EFFECTS]

According to an embodiment of the present disclosure, information related to a first set of beams is configured, and a UE reports CSI calculated based on measurement for DL RSs related to the first set of beams. The CSI includes information related to at least one beam of a second set related to the first set. Based on the information related to the first set of beams, a relationship between the first set (Set B) of beams being measured and the second set (Set A) of beams being reported can be determined.

Accordingly, a beam estimation/prediction operation based on the above-described BM-Casel can be supported. Since beams are estimated/determined in units more precise than beams transmitted by a base station (beams measured by a UE), the accuracy of beam management can be improved without increasing RS overhead compared to the existing method.

Effects which may be obtained by the present disclosure are not limited to the aforementioned effects, and other technical effects not described above may be evidently understood by a person having ordinary skill in the art to which the present disclosure pertains from the following description.

### [BRIEF DESCRIPTION OF THE DRAWINGS]

FIG.1 illustrates an example of beamforming using SSB and CSI-RS.
FIG. 2 is a flowchart showing an example of a DL BM procedure using SSB.
FIG. 3 illustrates a functional framework of an AI/ML model.
FIG. 4 illustrates a signaling procedure according to an embodiment of the present disclosure.
FIG. 5 is a flow chart illustrating a method performed by a user equipment according to an embodiment of the present disclosure.
FIG. 6 is a flow chart illustrating a method performed by a base station according to another embodiment of the present disclosure.
FIG. 7 illustrates configuration of a first device and a second device according to an embodiment of the present disclosure.

### [DETAILED DESCRIPTION]

A detailed description to be disclosed below together with the accompanying drawing is to describe exemplary embodiments of the present disclosure and not to describe a unique embodiment for carrying out the present disclosure. The detailed description below includes details to provide a complete understanding of the present disclosure. However, those skilled in the art know that the present disclosure may be carried out without the details.

In some cases, in order to prevent a concept of the present disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the terminal. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), AR(Augmented Reality) device, VR(Virtual Reality) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, an Unmanned Aerial Vehicle (UAV), AR(Augmented Reality) device, VR(Virtual Reality) device, and the like.

### Beam Management (BM)

A BM procedure as layer 1 (L1)/layer 2 (L2) procedures for acquiring and maintaining a set of base station (e.g., gNB, TRP, etc.) and/or terminal (e.g., UE) beams which may be used for downlink (DL) and uplink (UL) transmission/reception may include the following procedures and terms.
- Beam measurement: Opeation of measuring characteristics of a beam forming signal received by the eNB or UE.
- Beam determination: Operation of selecting a transmit (Tx) beam/receive (Rx) beam of the eNB or UE by the eNB or UE.
- Beam sweeping: Operation of covering a spatial region using the transmit and/or receive beam for a time interval by a predetermined scheme.
- Beam report: Operation in which the UE reports information of a beamformed signal based on beam measurement.

The BM procedure may be divided into (1) a DL BM procedure using a synchronization signal (SS)/physical broadcast channel (PBCH) Block or CSI-RS and (2) a UL BM procedure using a sounding reference signal (SRS).

Further, each BM procedure may include Tx beam sweeping for determining the Tx beam and Rx beam sweeping for determining the Rx beam.

### DL BM

The DL BM procedure may include (1) transmission of beamformed DL reference signals (RSs) (e.g., CIS-RS or SS Block (SSB)) of the eNB and (2) beam reporting of the UE.

Here, the beam reporting includes a preferred DL RS identifier (ID)(s) and L1-Reference Signal Received Power (RSRP) corresponding to the preferred DL RS identifier (ID)(s).

The DL RS ID may be an SSB Resource Indicator (SSBRI) or a CSI-RS Resource Indicator (CRI).

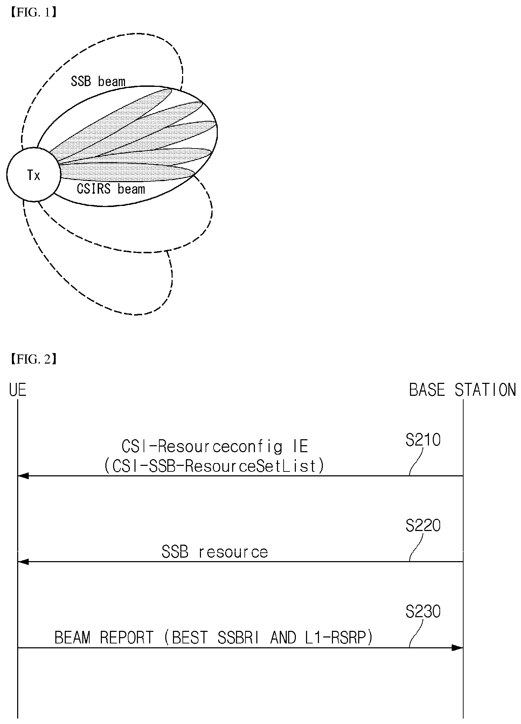

FIG.1 illustrates an example of beamforming using SSB and CSI-RS.

As illustrated in FIG. 1, an SSB beam and a CSI-RS beam may be used for the beam management. A measurement metric is an L1-RSRP for each resource/block. The SSB may be used for coarse beam management and the CSI-RS may be used for fine beam management. The SSB may be used for both the Tx beam sweeping and the Rx beam sweeping.

The Rx beam sweeping using the SSB may be performed while the UE changes the Rx beam for the same SSBRI across multiple SSB bursts. Here, one SS burst includes one or more SSBs and one SS burst set includes one or more SSB bursts.

FIG. 2 is a flowchart showing an example of a DL BM procedure using SSB.

A configuration for beam report using the SSB is performed during a CSI/beam configuration in an RRC connected state (or RRC connected mode).
- The UE receives from the eNB CSI-ResourceConfig IE including CSI-SSB-ResourceSetList including SSB resources used for the BM (S210).

Table 1 shows an example of CSI-ResourceConfig IE. As shown in Table 1, a BM configuration using the SSB is not separately defined and the SSB is configured like the CSI-RS resource.

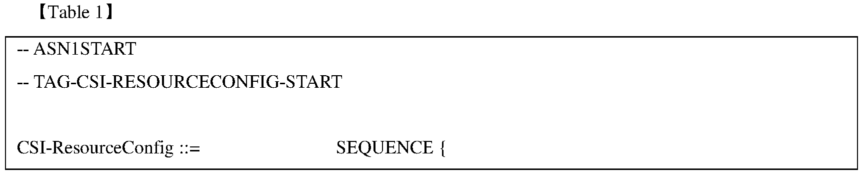

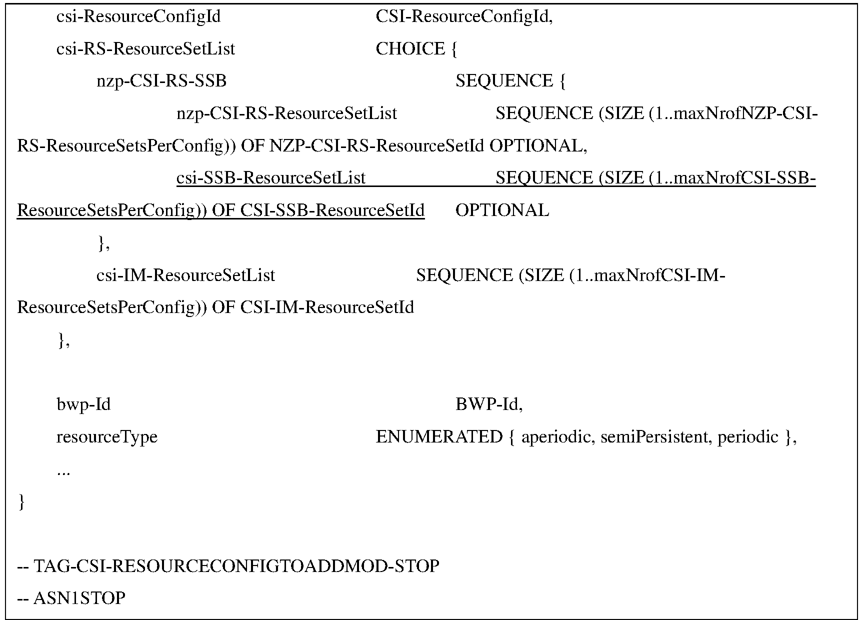

In Table 1, csi-SSB-ResourceSetList parameter represents a list of SSB resources used for beam management and reporting in one resource set. Here, SSB resource set may be configured as {SSBx1, SSBx2, SSBx3, SSBx4, ...}. For example, SSB index may be defined as 0 to 63.
- The UE receives from the eNB the SSB resource based on the CSI-SSB-ResourceSetList (S220).
- When CSI-reportConfig associated with reporting of SSBRI and L1-RSRP is configured, the UE (beam) reports to the eNB best SSBRI and L1-RSRP corresponding thereto (S230).

In other words, when reportQuantity of the CSI-reportConfig IE is configured as 'ssb-Index-RSRP', the UE reports to the eNB best SSBRI and L1-RSRP corresponding thereto.

In addition, when the CSI-RS resource is configured in the same OFDM symbol(s) as SSB (SS/PBCH Block) and 'QCL-TypeD' is applicable, the UE may assume that the CSI-RS and the SSB are quasi co-located from the viewpoint of 'QCL-TypeD'.

Here, the QCL TypeD may mean that antenna ports are QCL from the viewpoint of a spatial Rx parameter. When the UE receives a plurality of DL antenna ports having a QCL Type D relationship, the same Rx beam may be applied. Further, the UE does not expect that the CSI-RS is configured in an RE overlapped with the RE of the SSB.

### BM enhancements in NR Rel-16

The DL/UL beam indication standardized in 3GPP NR Rel-15 has been designed to separately indicate beams for each DL/UL channel/RS resource to ensure beam indication flexibility, and this indication method has been designed separately for each channel/RS.

This design direction eventually had the problem that a base station had to indicate a beam change for each channel/RS resource to multiple UEs communicating with the base station using a single beam in order to change a serving beam for the multiple UEs, which resulted in large signaling overhead and large beam change latency. Along with the UL beam change, UL power control-related parameters, especially pathloss RS (PL RS), had to be changed for each UL channel/RS, which also resulted in signaling overhead/latency problems. To complement these drawbacks, five features were introduced in Rel-16. Table 2 below shows the five features.

**[Table 2]**

| |
|---|
| 1. Default spatial relation/PL RS |
| Firstly, since many UEs in NR FR2 deployment use a single analog beam at a time and meet the beam correspondence, this enables unifying DL and UL beam indication, meaning that a DL RS resource can be |
| commonly used as a source RS for both DL beam and UL beam indication. It is also possible to unify the source DL RS for DL/UL beam indication with the pathloss reference RS, i.e. the RS used for pathloss estimation at UE for UL power control, because gNodeB would use a same beam direction for both transmission of the DL RS and reception of the UL signal. Based on this motivation, the feature so called 'default spatial relation/pathloss reference RS' was introduced in Rel-16. In this mode of operation, spatial relation RS and pathloss reference RS do not need to be explicitly indicated from gNodeB to UE, and UE uses one source RS for PDCCH/PDSCH beam as for the spatial relation RS and the pathloss reference RS. Therefore, gNodeB only needs to update the DL source RS whenever needed to update the serving Tx/Rx beam for the UE. Above operation can be enabled for dedicated PUCCH, SRS, and/or PUSCH scheduled by DCI format 0_0 by respective RRC enablers. |
| 2. Multi-CC simultaneous TCI/spatial relation update |
| Secondly for multi-carrier operation, it is common that antenna/RF components are shared for same or multiple bands at both gNodeB and UE sides. For example, multi-band antenna is a very common tool for UE implementation to minimize size and cost of the communication modules. This means that a beam can be commonly used for transmission and/or reception across multiple component carriers (CCs) in one or multiple bands. Based on this motivation, BM signaling can be saved via switching beam indication from per CC basis into per CC group basis. Therefore, in Rel-16, it was introduced that the source RS for DL/UL beam indication can be updated simultaneously across multiple CCs. For this operation, one or two CC lists can be configured to UE by higher layer for DL and UL, respectively. Once source RS ID(s) are activated for DL beam indication, the RS(s) with the same RS ID(s) are also activated in other CC(s) in the same CC list. Similarly, once a spatial relation RS is activated for an SRS resource in a CC, the same RS is activated as spatial relation RS for the SRS resource(s) with the same resource ID in other CC(s) in the same CC list. |
| 3. PUCCH resource group based spatial relation update |
| Third, in Rel.15, the spatial relation RS for PUCCH can be activated/deactivated per resource level. Since NR allows up to 128 PUCCH resources per UE, this per-resource based signaling would require a large amount of beam indication signaling for high/mid mobility UE. Due to the fact that one or a few beams are typically used |

| |
|---|
| across all PUCCH resources, e.g., one common beam per UE or per UE panel, PUCCH resource group based spatial relation update mechanism was introduced in Rel-16. For a UE, up to four PUCCH resource groups can be configured by RRC per BWP, and one MAC CE can activate/deactivate a common spatial relation RS for all the PUCCH resources in the same resource group. |
| 4. MAC CE based spatial relation indication for aperiodic/semi-persistent SRS |
| Fourth, SRS is an important tool for UL link adaptation and for DL channel estimation using DL-UL channel reciprocity. In Rel.15, spatial relation RS for aperiodic SRS was configured by RRC only, meaning that a large number of SRS resources with different spatial relation RSs need to be configured by RRC to support high mobility UE, for gNodeB to dynamically select and trigger one SRS resource among them according to UE mobility. To alleviate this burden, MAC CE based spatial relation indication for aperiodic/semi-persistent SRS was introduced in Rel-16. Using this MAC CE, spatial relation RSs for a set of SRS resources can be updated together. |
| 5. MAC CE based PL RS update for aperiodic/semi-persistent SRS and PUSCH |
| Fifth, in Rel.15, pathloss reference RSs for UL power control for PUSCH and SRS could only be configured by RRC and the maximum configurable number of pathloss RSs was limited to a small number, which was four. This could lead to frequent RRC reconfiguration considering sharply beamformed RS transmission and high UE mobility in FR2. To address this issue, MAC CE based pathloss reference RS update for aperiodic/semi-persistent SRS and PUSCH was introduced in Rel-16. The maximum configurable number of pathloss reference RSs by RRC was increased to 64, and the new MAC CE can activate up to four pathloss reference RSs among them. Two MAC |
| CEs were introduced for SRS and PUSCH, respectively. |

In Rel-16, enhancements related to beam reporting were made in addition to the beam/PL RS indication-related enhancements described above. In Rel-15, a mode in which a UE measures/reports L1-RSRP for each beam RS is supported. However, in an environment with high inter-beam interference, it is difficult to guarantee that a specific beam RS has good quality as a serving beam just because L1-RSRP, i.e., a reception intensity of the specific beam RS is high. In other words, the UE may select a beam, that has a high reception intensity but has high beam interference, and report the beam to a base station. To overcome this drawback, Rel-16 supports a new beam reporting mode in which the base station configures resources for interference measurement as well as RSs for channel measurement, and the UE measures L1-SINR for the channel resources and the interference resources based on this and reports several RSs with high L1-SINR value.

### BM enhancements in NR Rel-17

As described above, various BM enhancements were made in Rel-16. In particular, the features were created that can significantly reduce the signaling overhead/latency in relation to the beam indication method. However, channel/RS-unified beams are still not configured/indicated to a UE operating with a single serving beam.

Based on this motivation, Rel-17 will standardize a channel/RS unified beam configuration/indication method. In NR, a DL beam is indicated through a transmit configuration indicator (TCI) and thus is referred to as a unified TCI state. An existing TCI state was separately configured/indicated for each DL RS/channel, but the unified TCI state is characterized by unified configuration/indication. Basically, a DL unified TCI state indicates a QCL type-D RS which is unified applied to (some) PDCCHs, PDSCH, and (some) CSI-RS resources, and an UL unified TCI state indicates a spatial relation RS (and PL RS) which is unified applied to (some) PUCCHs, PUSCH, and (some) SRSs. Since the UL spatial relation and PL RS can also be matched with the DL beam RS for a UE, for which beam correspondence is established, in the same manner as Rel-16 default spatial relation/PL RS feature, the channels/RS to which the unified TCI state is applied can encompass both DL channels/RSs and UL channels/RSs. This is referred to as a joint DL/UL TCI state. That is, the following two modes will be supported.
- Joint DL/UL TCI configuration/indication mode: DL RS configured/indicated in a joint TCI state may be applied as not only the QCL type-D RSs for DL channels/RSs but also the spatial relation RSs (and PL RS) for UL channels/RSs. That is, if an update to the joint TCI state is indicated, the beam RSs (or/and PL RS) for the DL channels/RSs and the UL channels/RSs may be changed together.
- Separate DL and UL TCI configuration/indication mode: QCL type-D source RSs for DL channels/RSs are unified and configured/indicated by a DL TCI state, and the spatial relation RSs (and PL RS) for UL channels/RSs are unified and configured/indicated by the UL TCI state. The DL TCI state and the UL TCI state are separately configured/indicated.

The DL/UL/joint TCI state will be indicated/updated via MAC-CE and/or DCI. More specifically, one or more TCI states of multiple TCI states configured by RRC (called a TCI state pool) are activated by MAC-CE. If the multiple TCI states are activated by MAC-CE, one of the multiple TCI states is indicated by DCI.

The DCI indication will be supported via a downlink DCI format (DCI1-1/1-2) in which a TCI field is supported, and will be supported both with PDSCH scheduling and without PDSCH scheduling. In the latter case, since the PDSCH scheduling is omitted (similar to the DCI-based semi-persistent scheduling (SPS) release method), ACK transmission of the UE for the corresponding DCI will be supported.

Enhancements related to beam report will be made in Rel-17. Rel-17 beam report mode will support a mode in which a UE measures/reports an optimal beam RS for each TRP, targeting a multi-TRP environment. To this end, if a beam measurement RS set/group is divided into two subsets/sub-groups, and the base station configures them, the UE will select RS(s) for each subset/sub-group and report them along with a quality value (L1-RSRP, [L1-SINR]) of the corresponding RS.

### AI/ML related Description

With the technological advancement of artificial intelligence/machine learning (AI/ML), node(s) and UE(s) constituting a wireless communication network are becoming more intelligent/advanced.

In particular, due to the intelligence of networks/base stations, it is expected that various network/base station decision parameters can be quickly optimized and derived/applied based on various environmental parameters.

The environmental parameters may include at least one of distribution/location of base stations, distribution/location/material of buildings/furniture, etc., location/movement direction/speed of UEs, or climate information. However, the above-described parameters are only examples, and the environmental parameters may further include other environmental parameters related to the network/base station decision parameters in addition to the listed parameters.

The network/base station decision parameters may include at least one of transmission/reception power of each base station (BS), transmission power of each UE, precoder/beam of BS/UE, time/frequency resource allocation for each UE, or duplex method of each BS. However, the above-described parameters are only examples, and the network/base station decision parameters may further include other parameters determined by the network/base station in addition to the listed parameters.

In line with this trend, many standardization organizations (e.g., 3GPP, O-RAN) are considering introduction of AI/ML, and studies on this are also actively underway.

The AI/ML may be easily referred to as artificial intelligence based on deep learning in a narrow sense, but conceptually, it may be classified as below.
- Artificial Intelligence: it is any automation that allows machines to do the work that people would otherwise do.
- Machine Learning: it refers to a technology in which machines learn patterns for decision-making from data on their own without explicitly programming rules.
- Deep Learning: it is an artificial neural network-based model, and allows machines to perform feature extraction and decision from unstructured data at once. This algorithm depends on a multilayer network consisting of interconnected nodes for feature extraction and transformation, inspired by biological nervous systems, i.e., neural networks. A common deep learning network architecture includes deep neural network (DNN), recurrent neural network (RNN), and convolutional neural network (CNN).

As above, artificial intelligence (AI) is the broadest concept of AI/ML, and deep learning is the narrowest concept of AI/ML. Machine learning (ML) may be interpreted as a narrower concept than artificial intelligence and a broader concept than deep learning.

### Types of AI/ML based on various criteria

### - Offline vs Online

### Offline Learning

- Offline learning faithfully follows a sequential procedure of database collection, learning, and prediction. That is, the collection and learning may be performed offline, and the completed program may be installed in the field and used for prediction work. In most situations, such offline learning methods are used.

### Online Learning

- Online learning refers to a method of gradually improving performance by incrementally learning with additional data generated, taking advantage of the fact that data that can be used for recent learning is continuously generated via the Internet.

### Classification based on AI/ML Framework concept

### - Centralized Learning

In centralized learning, when training data collected from multiple different nodes is reported to a centralized node, all data resources/storage/learning (e.g., supervised learning, unsupervised learning, reinforcement learning, etc.) are performed in one centralized node.

### - Federated Learning

Federated learning is constructed based on data in which a collective model exists across individually distributed data owners. Instead of collecting data into the model, AI/ML models are imported into a data source, allowing local nodes/individual devices to collect data and train their own copies of the model, so there is no need to report source data to a centralized node.

In the federated learning, parameters/weight of the AI/ML model is sent again to the centralized node to support general model training. The federated learning has advantages in terms of increase in computation speed and information security. That is, a process of uploading personal data to a central server is unnecessary, and leakage and misuse of personal information can be prevented.

### - Distributed Learning

Distributed learning refers to a concept that machine learning processes are scaled and distributed across a cluster of nodes. Training models are shared across multiple nodes split and operating simultaneously to speed up model training.

### Classification according to learning method

### - Supervised Learning

Supervised learning is a machine learning task that aims to learn a mapping function from input to output, given a labeled data set. The input data is called training data and has known labels or results. Examples of the supervised learning are as follows.
1) Regression: Linear Regression, Logistic Regression
2) Instance-based Algorithms: k-Nearest Neighbor (KNN)
3) Decision Tree Algorithms: CART
4) Support Vector Machines: SVM
5) Bayesian Algorithms: Naive Bayes
6) Ensemble Algorithms: Extreme Gradient Boosting, Bagging: Random Forest

Supervised learning may be further grouped into regression and classification problems, where classification is predicting labels and regression is predicting quantities.

### - Unsupervised Learning

Unsupervised learning is a machine learning task that aims to learn functions that describe hidden structures in unlabeled data. The input data is not labeled and there are no known results. Some examples of unsupervised learning include K-means clustering, Principal Component Analysis (PCA), nonlinear Independent Component Analysis (ICA), and long short-term memory (LSTM).

### - Reinforcement Learning

In reinforcement learning (RL), an agent aims to optimize long-term goals by interacting with the environment based on a trial and error process, and is goal-oriented learning based on interaction with the environment. Examples of RL algorithm are as follows.
1) Q-learning
2) Multi-armed bandit learning
3) Deep Q Network
4) State-Action-Reward-State-Action (SARSA)
5) Temporal Difference Learning
6) Actor-critic reinforcement learning
7) Deep deterministic policy gradient
8) Monte-Carlo tree search

The reinforcement learning can be additionally grouped into model-based reinforcement learning and model-free reinforcement learning.

Model-based reinforcement learning: it refers to an RL algorithm that uses a predictive model, and obtains the transition probabilities between states using various dynamic states of the environment and a model in which these states lead to rewards.

Model-free reinforcement learning: it refers to a RL algorithm based on value or policy that achieves the maximum future reward. Multi-agent environments/states are computationally less complex and do not require an accurate representation of the environment.

RL algorithms can also be classified into value-based RL vs. policy-based RL, policy-based RL vs. non-policy RL, etc.

### Representative Model of Deep Learning

### 1. Feed-Forward Neural Network (FFNN)

FFNN consists of an input layer, a hidden layer, and an output layer.

### 2. Recurrent Neural Network (RNN)

RNN is a type of artificial neural network in which hidden nodes are connected to directed edges to form a directed cycle. It is a model suitable for processing data that sequentially appears, such as voice and text.

### 3. Convolution Neural Network (CNN)

CNN is used for two purposes of reducing model complexity and extracting good features by applying convolution operations generally used in video processing or image processing fields.
- Kernel or filter: it refers to a unit/structure that applies weight to an input of a specific range/unit.
- Stride: it refers to a range of movement of the kernel within the input.
- Feature map: it refers to a result of applying the kernel to the input.
- Padding: it refers to a value added to adjust the size of the feature map.
- Pooling: it refers to an operation to reduce the size of the feature map by downsampling the feature map (e.g., max pooling, average pooling).

### 4. Auto Encoder

An auto encoder refers to a neural network that receives a feature vector x as input and outputs the same or similar vector x'. An input node and an output node of the auto encoder have the same feature.

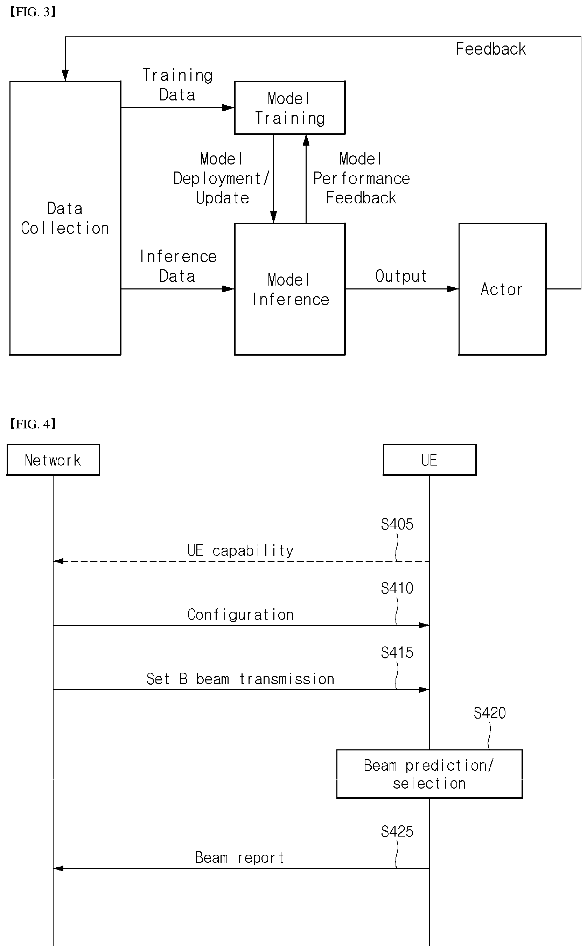

FIG. 3 illustrates a functional framework of an AI/ML model.

In the functional framework illustrated in FIG. 3, the definition of each term and the operation of each function may be based on Table 3 below.

**[Table 3]**

| |
|---|
| Data collection: Data collected from the network nodes, management entity or UE, as a basis for ML model training, data analytics and inference. |
| ML Model: A data driven algorithm by applying machine learning techniques that generates a set of outputs consisting of predicted information, based on a set of inputs |
| ML Training: An online or offline process to train an ML model by learning features and patterns that best present data and get the trained ML model for inference. |
| ML Inference: A process of using a trained ML model to make a prediction or guide the decision based on collected data and ML model. |
| • Data Collection is a function that provides input data to Model training and Model inference functions. AI/ML algorithm specific data preparation (e.g., data pre-processing and cleaning, formatting, and transformation) is not carried out in the Data Collection function. |
| Examples of input data may include measurements from UEs or different network entities, feedback from Actor, output from an AI/ML model. |
| o Training Data: Data needed as input for the AI/ML Model Training function. |
| o Inference Data: Data needed as input for the AI/ML Model Inference function. |
| • Model Training is a function that performs the ML model training, validation, and testing which may generate model performance metrics as part of the model testing procedure. The Model Training function is also responsible for data preparation (e.g. data pre-processing and cleaning, formatting, and transformation) based on Training Data delivered by a Data Collection function, if required. |
| o Model Deployment/Update: Used to initially deploy a trained, validated, and tested AI/ML model to the Model Inference function or to deliver an updated model to the Model Inference function. |
| ▪ Note: Details of the Model Deployment/Update process as well as the use case specific AI/ML models transferred via this process are out of RAN3 Rel-17 study scope. The feasibility to single-vendor or multi-vendor environment has not been studied in RAN3 Rel-17 study. |
| • Model Inference is a function that provides AI/ML model inference output (e.g. predictions or decisions) . Model Inference function may provide model performance feedback to Model Training function when applicable. The Model inference function is also responsible for data preparation (e.g. data pre-processing and cleaning, formatting, and transformation) based on Inference Data delivered by a Data Collection function, if required. |
| o Output: The inference output of the AI/ML model produced by a Model Inference function. |
| ▪ Note: Details of inference output are use case specific. |
| ∘ Model Performance Feedback: It may be used for monitoring the performance of the AI/ML model. |
| ▪ Note: Details of the Model Performance Feedback process are out of RAN3 scope. |
| • Actor is a function that receives the output from the Model inference function and triggers or performs corresponding actions. The Actor may trigger actions directed to other entities or to itself. |
| ∘ Feedback: Information that may be needed to derive training or inference data or performance feedback. |

### Data Set

A data set used in AI/ML is classified into training data, validation data, and test data, and their definition is as follows.

### - Training data

Data set for training a model

### - Validation data

Data set for verifying a model whose training has been already completed

The validation data is a data set usually used to prevent over-fitting of a training data set.

The validation data is a data set for selecting the best among various models trained during the training process. Therefore, the validation data may be seen as a data set related to training.

### - Test data

The test data is a data set for final evaluation. The test data is independent of training.

The data set may use a training set including the above-described data in a predetermined ratio.

For example, a training set including training data and validation data in a ratio of 8:2 or 7:3 may be used.

For example, a training set including training data, validation data, and test data in a ratio of 6:2:2 may be used.

Collaboration level

A collaboration level can be defined as follows depending on whether the AI/ML function between a base station and a UE is capable.

**[Table 4]**

| |
|---|
| **Cat 0a)** No collaboration framework: AI/ML algorithms purely implementation based and not requiring air-interface changes. -> Baseline |
| **Cat 0b)** No collaboration framework with modified Air-Interface catering to efficient implementation-based AI/ML algorithms. |
| **Cat 1)** Inter-node assistance to improve the respective nodes' AI/ML algorithms. This would apply to UEs getting assistance from gNBs (for training, adaptation, etc.) and vice-versa. This level does not require model exchange between network nodes. |
| **Cat 2)** Joint ML operation between UEs and gNBs. This level requires AI/ML model instruction or exchange between network nodes. |

The collaboration levels shown in Table 4 are examples and may be modified and utilized differently from the illustrated examples based on the implementation method. For example, a collaboration level that combines two or more of the illustrated collaboration levels may be defined/utilized. For example, collaboration level(s) excluding one or more of the illustrated collaboration levels may be utilized.

FIG. 4 illustrates a signaling procedure according to an embodiment of the present disclosure.

More specifically, FIG. 4 illustrates an example of signaling between a user equipment (UE) and a network (NW) based on the above-described proposed method (e.g., method 1, method 2).

The UE/NW is merely an example and can be replaced with various devices as described above. FIG. 4 is only for convenience of explanation and does not limit the scope of the present disclosure. In addition, some step(s) illustrated in FIG. 4 may be omitted depending on the situation and/or setting. In FIG. 4, the NW may correspond to any entity, such as a base station (BS), node B, or TRP belonging to the network.

A UE may report UE capability information to an NW, in S405. The UE capability information may include information related to a UE AI/ML model (training/inference), and report information on whether beam prediction is possible.

The UE may receive a configuration related to Set B (and Set A) from the NW, in S410. The configuration may include ID information for beams, transmission period and time/frequency location information, sequence information, information on relation between RSs (e.g. whether QCL is present), beam angle information, beam width information, and beam grid-related information.

After the beam related configuration in S410, a base station may transmit beam RSs belonging to the Set B to the UE, and the UE may perform a measurement for this, in S415.

The UE that performs the beam related configuration (S410) and the measurement of the Set B beams may select preferred beam(s) based on the configuration and the measurement values. AI/ML of the UE may be utilized/applied in this process, in S420.

Subsequently, the UE may transmit information on the selected beams to the NW by applying the information to the proposed method (e.g., method 1, method 2), in S425.

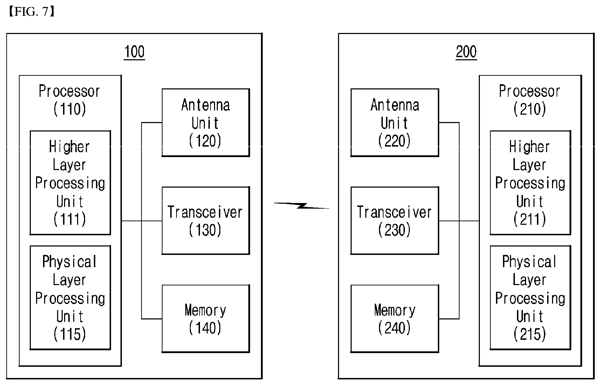

The NW/UE signaling and operation described above may be implemented by devices 100 and 200 of FIG. 7. For example, the NW may correspond to a first device 100, and the UE may correspond to a second device 200. In some cases, the reverse case may also be considered.

For example, the NW/UE signaling and operation described above may be processed by at least one processor (110 and 210) of FIG. 7. The NW/UE signaling and operation described above may be stored in a memory (e.g., a memory 140/240 of FIG. 7) in the form of a command/program (e.g., instructions, executable codes) for running at least one processor (110 and 210).

In the present disclosure, '/' may be interpreted as 'and', 'or', or 'and/or' according to according to the context. In the present disclosure, the 'beam' may refer to a source RS for a 'spatial filter' or a 'spatial relation' and may be interpreted as QCL (type-D) RS or TCI state or spatial relation RS (in uplink).

3GPP Rel-18 started a study on how to use AI/ML in the air-interface. The study item (SI) covers beam management, CSI, and positioning as the main use cases of AI/ML. The present disclosure covers a beam management method among them.

There may be two use cases performing the improved beam management using AI/ML: 'improvement of beam management performance through spatial beam prediction' and 'improvement of beam management performance through temporal beam prediction.' The present disclosure mainly considers the 'improvement of beam management performance through spatial beam prediction,' but it should be noted that the technique in the present disclosure can be modified and applied to the 'improvement of beam management performance through temporal beam prediction.'

The 'improvement of beam management performance through spatial beam prediction' is a use case that achieves more improved beam management precision with lower RS overhead based on UE location/mobility information, etc. as a measurement result for present/past beam RS. In this instance, AI/ML of a UE and/or a network (NW) may be used in a spatial beam prediction operation. For example, AI/ML may be used to achieve performance comparable to beam selection from a large number of beam RSs based on a result measured from a small number of beam RSs.

The AI/ML based beam prediction may be defined based on inputs and outputs related to an AI/ML model (of the UE and/or NW).

For example, the input may be information related to measurement of beams (e.g., RSs related to beams), and the output may be information on specific beam(s) (e.g., ID(s) of RSs related to specific beam(s)).

For example, the input may be reference signal received power (RSRP) of beams in a first set, and the output may be RSRP of beams in a second set (e.g., RSRP of RSs related to all beams or RSRP of RSs related to Set A of beams). The RSRP of the beams in the first set may include RSRP of RSs related to some of all the beams and/or RSRP related to Set B of beams. The RSRP of the beams in the second set may include RSRP of RSs related to all the beams and/or RSRP of RSs related to the Set A of beams.

Table 5 below summarizes the discussions and discussion results related to beam performance improvement.

**[Table 5]**

| | | |
|---|---|---|
| **Conclusion (109e):** | | |
| For the sub use case BM-Casel, consider the following alternatives for further study: | | |
| • Alt.1: Set B is a subset of Set A | | |
| | ∘ FFS: the number of beams in Set A and B | |
| | ∘ FFS: how to determine Set B out of the beams in Set A (e.g., fixed pattern, random pattern, ...) | |
| • Alt.2: Set A and Set B are different (e.g. Set A consists of narrow beams and Set B consists of wide beams) | | |
| | ∘ FFS: the number of beams in Set A and B | |
| | ∘ FFS: QCL relation between beams in Set A and beams in Set B | |
| | ∘ FFS: construction of Set B (e.g., regular pre-defined codebook, codebook other than regular pre-defined one) | |
| • Note1: Set A is for DL beam prediction and Set B is for DL beam measurement. | | |
| • Note2: The narrow and wide beam terminology is for SI discussion only and have no specification impact | | |
| • Note3: The codebook constructions of Set A and Set B can be clarified by the companies. | | |
| **Conclusion** (109e) | | |
| Regarding the sub use case BM-Casel, further study the following alternatives for AI/ML input: | | |
| • Alt.1: Only L1-RSRP measurement based on Set B | | |
| • Alt.2: L1-RSRP measurement based on Set B and assistance information | | |
| • | FFS: Assistance information. The following were mentioned by companions in the discussion: Tx and/or Rx beam shape information (e.g., Tx and/or Rx beam pattern, Tx and/or Rx beam boresight direction (azimuth and elevation), 3dB beamwidth, etc.), expected Tx and/or Rx beam for the prediction (e.g., expected Tx and/or Rx angle, Tx and/or Rx beam ID for the prediction), UE position information, UE direction information, Tx beam usage information, UE orientation information, etc. | |
| | | • Note: The provision of assistance information may be infeasible due to the concern of disclosing proprietary information to the other side. |
| • Alt.3: CIR based on Set B | | |
| • Alt.4: L1-RSRP measurement based on Set B and the corresponding DL Tx and/or Rx beam ID | | |
| • Note1: It is up to companies to provide other alternative(s) including the combination of some alternatives | | |
| • Note2: All the inputs are "nominal" and only for discussion purpose. | | |

In the results, BM-Casel refers to 'case of performing estimation/prediction of beams of Set A based on a measurement result of beams included in Set B.' The Set A and the Set B are different.

The Set A and the Set B related to embodiments of the present disclosure described below may be defined based on Table 5 above. The Set B may be a set including beams related to RSs transmitted by the base station (RSs received by the UE). The Set A may be a set of beams used to estimate/determine beams based on a measurement result of RSs related to the Set B. The Set A may be a set of beams used to indicate a specific beam.

The purpose of the BM-Casel is to select/estimate/predict a beam more precisely than selecting a beam based on the existing method. Specifically, according to the BM-Casel, a beam is selected/estimated/predicted based on the Set A, which is more precise than the Set B (e.g., in selection the Set A that includes a larger number of beams than the Set B and has a shape of a beam with a narrower width than the beam of the Set B).

The present disclosure proposes a method of performing a beam report for Set A based on beam measurement results based on Set B. The 'beam report for Set A' refers to a beam report for higher beam granularity than Set B (e.g., a larger number of beams, larger max/min angle difference between beams, a smaller angle difference between beams, etc.), and it may be applied even if Set A is not explicitly defined/set.

According to the existing beam reporting method, the UE reports beam RS ID(s) (e.g., CRI, SSBRI) and beam quality value(s) (e.g., L1-RSRP, L1-SINR) of the corresponding beams. If the above report is performed based on the measurement result for Set B, only the granularity as much as the number of beams belonging to the Set B may be included.

According to the AI/ML based beam reporting method, the UE may perform a beam report for high granularity based on UE location/mobility information, UE/base station beam information, etc. as (accumulated) measurement results for Set B beam RSs. To this end, the base station may provide the UE with information about a beam angle (e.g., boresight direction/angle), a beam width (e.g., 3 dB beamwidth), a beamforming coefficient, etc. of each of Set B beams (and Set A beams). This information may be an absolute value, but may also be a relative value between beams (e.g., difference in a beam angle/beam width between a first beam and an nth beam).

In such an environment described above, a method of reporting beams with higher beam granularity may consider a method of replacing the existing beam RS ID and transmitting (linear) combination information for multiple Set B beams.

### Method 1

A base station configures information (e.g., absolute/relative beam angle information) of Set B beams to a UE. The UE reports (linear) combination coefficient information for (some of) the Set B beams, which is included as beam information, to the base station.

An example of configuring reporting parameters by applying the above method is as follows.

Information for N1 beams (sets) may be reported. In this instance, information for each of the N1 beams (sets) may include at least one of the following i) to iii).
i) N2 beam RS ID(s))
ii) Information on linear combination (LC) coefficient(s) of N2 beam RS(s)
iii) Beam quality information (e.g., L1-RSRP/SINR)

In the ii), the LC coefficients may be based on quantized LC coefficients or a codebook index. A codebook may refer to a DFT codebook including vectors/matrices of LC coefficients.

In the above example, information on one beam may be configured through linear combination for N2 beams, and the configured information may include a beam quality value for a combined beam. N1 combinations of the combined beam and the beam quality value may be reported.

In other words, information on N1 (preferred) beams may be reported to include at least one of the i) to iii) above.

Various beams (with beam angles) other than beams constituting Set B may be expressed from the beam combination coefficients (the above-described LC coefficients) for the plurality of beams. The operation of expressing the various beams based on the combination coefficients may be an operation of taking intrapolation/extrapolation for the beams.

For example, in order for the UE to find a preferred beam based on the above-described method, information on the beams constituting the Set B (e.g., absolute/relative beam angle (difference)) may be required. A union of all candidate beams that can be combined through LC coefficients applicable to the beams of the Set B may constitute Set A.

For example, candidate values for the LC coefficients may be set or specified by the base station.

For example, the UE may freely select the candidate values for the LC coefficients. In this instance, a quantization level (how many bits each value will be represented with) may be specified/set. The UE may select and report the quantization level.

In the application of the method 1, a combined beam preferred by the UE configuring multiple beams/panels may vary depending on the applied beam/panel. In this case, the UE may operate as follows.

The UE may report information for (multiple N2 beams and) multiple LC values for the same base station beam (for multiple UE beams/panels).

In the embodiment, although it is assumed that the N2 value is the same for the respective combined beams, it is obvious that different N2 values can be applied to the respective combined beams. For example, a first combined beam may be based on linear combination of two RSs, and a second combined beam may be based on linear combination of three RSs. That is, among the information for each of the N1 sets described above, N2 may be different for each set.

In the application of the method 1, before AI/ML model training is complete or when the trained model is outdated, the UE may perform the beam report based on the Set B.

For example, whether the trained model is outdated may be determined based on an error rate of the model via model validation or model monitoring (e.g., the trained model is determined to be outdated if the error rate is greater than or equal to a threshold).

For example, with respect to the beam report based on the Set B, the UE may select and report the LC coefficients in which only one LC coefficient has a value of 1 and the remaining coefficients are 0.

For example, based on the beam report operation based on the Set B, the report information may include only information related to the beam(s) of the Set B. The base station/NW may implicitly determine a training state of the UE model or whether the UE model training is complete, based on whether the report information includes only the information related to the beam(s) of the Set B.

For example, the UE may explicitly report, to the base station/NW, the training state of the model or whether the model training is complete.

In an embodiment, based on the implicit/explicit information (e.g., the report including only the information related to the beam(s) of the Set B or the report information including the training state of the model/whether the model training is complete), the base station may decide/determine whether to apply the beam report based on the method 1 or the existing beam report based on the Set B.

In an embodiment, based on the implicit/explicit information (e.g., the report including only the information related to the beam(s) of the Set B or the report information including the training state of the model/whether the model training is complete), feedback information configuration and the number of bits for the same report configuration may vary (depending on the relevant base station configuration/indication).

As a specific example, it may be determined/controlled whether to apply a fallback beam report based on the Set B or the beam report based on the method 1 by the feedback information configuration and configuration/indication related to the number of bits. Based on the feedback information configuration and the configuration/indication related to the number of bits, the UE may perform the fallback beam report based on the Set B (Set B based measurement, Set B related information reporting) or perform the beam report based on the method 1 (Set B based measurement, Set A related information reporting).

The following proposes a beam reporting method that can be used as a replacement for or in addition to the method 1.

### Method 2

A base station configures/indicates, to a UE, coordinate information for Set B of beams. The coordinate information of the beams of Set B may be information based on a configured/specified beam grid.

The UE reports the coordinate information for the beam grid to the base station as beam information. The coordinate information for the beam grid may be estimated/determined based on i) the coordinate information of the beams of Set B and ii) a measurement result for the Set B of beams.

The beam grid may be configured as a one-dimensional, two-dimensional, or three-dimensional grid.

The beam grid may be interpreted/defined/configured/specified as i) a grid for beam boresight angle, ii) a grid for a location where each beam points, or iii) a grid for an area covered by each beam, or the like.

For example, a set of beams that can be expressed in the beam grid in the method 2 may constitute Set A. The set of beams that can be expressed in the beam grid may correspond to a virtual beam set including specific beam angles (assuming beam properties such as a specific beam gain). The UE may perform estimation based on a result of correcting a measurement result of the received Set B beams to match the virtual beam set (e.g., pre-filtering of input data for UE AI/ML).

Along with the coordinate information, an (estimated) quality value (e.g., L1-RSRP/SINR) for the beam represented by the coordinates may be reported.

The beams of Set B may be configured/defined to be located only at intersections of the grids. As in Example 1 below, Set B configuration information of the base station may only include information on the intersections of the grids (e.g., coordinate information expressed as integers).

### Example 1) 2D grid from (0,0) to (4,4), Set B={SSB1=(1,2), SSB2=(1,3), SSB3=(2,2), SSB4=(2,3)}

The beams of Set B may be configured/defined to be located at locations other than the intersections of the grids. As in Example 2 below, the Set B configuration information of the base station may include coordinate information on other locations as well as the intersections of the grids (e.g., coordinate information expressed as integers/real number).

### Example 2) 2D grid from (0,0) to (4,4), Set B={SSB1=(1.5,2.2), SSB2=(1.2,3.9), SSB3=(2.1,2.8), SSB4=(2.0,3.9)}

In the examples, the UE may select a (preferred) beam grid from among the intersections (e.g., best beam = (2,4)) or select other location expressed as a decimal point within the grid (e.g., best beam = (0.5, 0.3)).

In addition, the (estimated) beam quality value (e.g., L1-RSRP/SINR) for the beam of the corresponding coordinates may also be reported.

In the above report, coordinate information for the plurality of beams (and quality values for the corresponding beams) may be reported to the base station. In this case, the number of same payload bits or the number of different payload bits may be applied to feedback information for each beam.

For example, the number of payload bits may be determined as follows.

A range of coordinate values that can be selected/reported for a 2nd best beam may be determined based on the coordinate values selected for the best beam (e.g., selecting a 2nd beam only near a 1st beam, or conversely, selecting a 2nd beam excluding the vicinity of the 1st beam). The number of payload bits for the 2nd best beam may be determined by the reduced/determined coordinate range based on the coordinate values selected for the best beam.

As above, by limiting the candidate values (coordinate candidate values), information on the 2nd best beam may be transmitted using a smaller number of bits. In the same manner as the 2nd best beam, a 3rd best beam, a 4th best beam, etc. may have a dependency on the coordinates of a higher-order beam (e.g., the 1st beam).

In other words, the number of payload bits for representing coordinate information of each of the beams of Set A reported by the UE may be related to a coordinate range determined based on the order of beam quality values.

For example, coordinate information of the first beam having the largest beam quality value may be reported based on a first payload based on a first coordinate range. The first coordinate range may be based on the entire range of the grids.

Coordinate information of the second beam having the second largest beam quality value may be reported based on a second payload based on a second coordinate range. The second coordinate range may be based on the range determined based on the coordinates of the first beam. The size of the second payload may be less than the size of the first payload.

As above, the coordinate range related to the payload (number of bits) for reporting coordinate information of each beam may be i) the entire range of the grids or ii) a range determined based on coordinates of beams in which the order of beam quality values is prior to the beam quality value of each beam.

In the application of the method 2, the UE configuring a plurality of beams/panels may vary preferred coordinate information based on the beam/panel applied. In this case, multiple coordinate value information for the same base station beam (for the plurality of UE beams/panels) may be reported.

When AI/ML of the UE is configured based on the method 2, an example of configuring input parameters and output parameters is as follows.
AI/ML input parameters: (beam grid, RSRP/SINR) of each set B beams
AI/ML output: N1 best beams predicted on the beam grid
(beam grid, RSRP/SINR) of each of the Set B beams, which are the input parameters of AI/ML on the UE side, may be corrected data.

The AI/ML of the UE may estimate/determine N1 best beam(s) based on the input parameters.

In an example of the AI/ML model configuration, how to perform AI/ML model training may be an issue. The following methods A to C may be considered as solutions to this.

### Method A) Model transfer by NW

### Method B) Training data provision by NW

For example, the NW may (pre-)receive reports of best beam output results for various (beam grid, RSRP) combinations (+UE Rx beam/panel configurations) from the UEs and provide this data to each UE. This method may be based on supervised learning.

### Method C) RS assistance by NW

According to this method, in order to help the UE to learn the model, the NW may transmit beam RSs for various possible grid(s) to the UE (multiple times).

For example, the NW may show the Set B beams by transferring the coordinates.

For example, the NW may additionally provide coordinate information for other DL RSs in addition to the Set B beams. As a specific example, the NW may periodically/aperiodically transmit, to the UE, beams transmitted in a wider grid than Set B. As another example, the Set B includes CSI-RSs, but the NW may additionally provide grid information of SSBs. The UE may measure the SSBs in a long period.

In the application of the method 2, before AI/ML model training is complete or when the trained model is outdated, the UE may perform the beam report based on the grid for Set B. As described above, whether the trained model is outdated may be determined based on an error rate of the model via model validation or model monitoring (e.g., the trained model is determined to be outdated if the error rate is greater than or equal to a threshold).

For example, based on the beam report operation based on the grid for Set B, the report information may include only information related to the beam(s) of the Set B. The base station/NW may implicitly determine a training state of the UE model or whether the UE model training is complete, based on whether the report information includes only the information related to the beam(s) of the Set B.

For example, the UE may explicitly report, to the base station/NW, the training state of the model or whether the model training is complete.

In an embodiment, based on the implicit/explicit information (e.g., the report including only the information related to the beam(s) of the Set B or the report information including the training state of the model/whether the model training is complete), the base station may determine whether to apply the beam report based on the method 2 or the existing beam report based on the Set B.

In an embodiment, based on the implicit/explicit information (e.g., the report including only the information related to the beam(s) of the Set B or the report information including the training state of the model/whether the model training is complete), feedback information configuration and the number of bits for the same report configuration may vary (depending on the relevant base station configuration/indication).

As a specific example, it may be determined/controlled whether to apply a fallback beam report based on the Set B or the beam report based on the method 2 by the feedback information configuration and configuration/indication related to the number of bits. Based on the feedback information configuration and the configuration/indication related to the number of bits, the UE may perform the fallback beam report based on the Set B (Set B based measurement, Set B related information reporting) or perform the beam report based on the method 2 (Set B based measurement, Set A related grid information reporting).

In the proposed techniques of the present disclosure, a reference time for beam reporting and predicted RSRP/SINR may be based on i) a Set B measurement time (e.g., a time based on an existing CSI reference resource) or ii) a future time.

For example, the method of the present disclosure may also be applied together with beam prediction for the future time. In this case, information reported based on the proposed techniques of the present disclosure (e.g., information related to beam(s) of Set A) may correspond to (preferred) beam information for the future time. The future time may be based on a time later than a CSI-RS reference resource time or a reporting time.

Although the proposed techniques of the present disclosure have been described based on AI/ML on the UE side, this does not mean that the techniques of the present disclosure can be applied only in the AI/ML implementation environment of the UE. The proposed techniques of the present disclosure can be applied in the AI/ML implementation environment on the base station/NW side or in a non-AI/ML environment. In addition, the proposed techniques of the present disclosure can be applied to sidelink communication. Specifically, in the proposed techniques of the present disclosure, the base station/NW can be changed to another UE and applied.

From an implementation perspective, the operations of the base station/UE according to the above-described embodiments (e.g., operations based on at least one of the methods 1 and 2) may be processed by a device of FIG. 7 described below (e.g., processors 110 and 210 of FIG. 7).

The operations of the base station/UE according to the above-described embodiments (e.g., operations based on at least one of the methods 1 and 2) may be stored in a memory (e.g., memories 140 and 240 of FIG. 7) in the form of a command/program (e.g., instructions, executable codes) for running at least one processor (e.g., processors 110 and 210 of FIG. 7).

A signaling procedure based on the above-described embodiments is described in detail below with reference to FIG. 4.

FIG. 4 illustrates a signaling procedure according to an embodiment of the present disclosure.

More specifically, FIG. 4 illustrates an example of signaling between a user equipment (UE) and a network (NW) based on the above-described proposed method (e.g., method 1, method 2).

The UE/NW is merely an example and can be replaced with various devices as described above. FIG. 4 is only for convenience of explanation and does not limit the scope of the present disclosure. In addition, some step(s) illustrated in FIG. 4 may be omitted depending on the situation and/or setting. In FIG. 4, the NW may correspond to any entity, such as a base station (BS), node B, or TRP belonging to the network.

A UE may report UE capability information to an NW, in S405. The UE capability information may include information related to a UE AI/ML model (training/inference), and report information on whether beam prediction is possible.

The UE may receive a configuration related to Set B (and Set A) from the NW, in S410. The configuration may include ID information for beams, transmission period and time/frequency location information, sequence information, information on relation between RSs (e.g. whether QCL is present), beam angle information, beam width information, and beam grid-related information.

After the beam related configuration in S410, a base station may transmit beam RSs belonging to the Set B to the UE, and the UE may perform a measurement for this, in S415.

The UE that performs the beam related configuration (S410) and the measurement of the Set B beams may select preferred beam(s) based on the configuration and the measurement values. AI/ML of the UE may be utilized/applied in this process, in S420.

Subsequently, the UE may transmit information on the selected beams to the NW by applying the information to the proposed method (e.g., method 1, method 2), in S425.

As mentioned above, the NW/UE signaling and operation described above may be implemented by devices 100 and 200 of FIG. 7. For example, the NW may correspond to a first device 100, and the UE may correspond to a second device 200. In some cases, the reverse case may also be considered.

For example, the NW/UE signaling and operation described above may be processed by at least one processor (110 and 210) of FIG. 7. The NW/UE signaling and operation described above may be stored in a memory (e.g., memories 140 and 240 of FIG. 7) in the form of a command/program (e.g., instructions, executable codes) for running at least one processor (110 and 210).

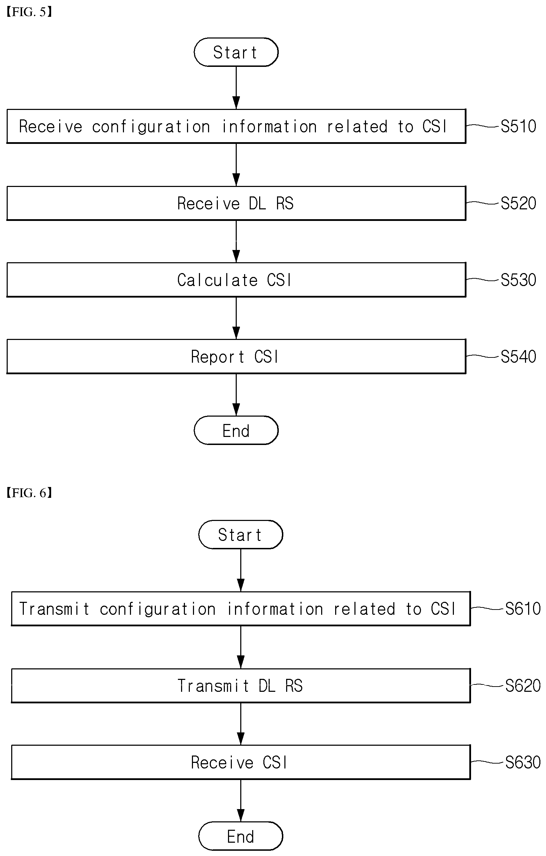

Below, the above-described embodiments are described in detail from a perspective of an operation of a UE and a base station with reference to FIGS. 5 and 6. Methods described below are merely distinguished for convenience of explanation. Thus, as long as the methods are not mutually exclusive, it is obvious that partial configuration of any method can be substituted or combined with partial configuration of another method.

FIG. 5 is a flow chart illustrating a method performed by a user equipment in a wireless communication system according to an embodiment of the present disclosure.

Referring to FIG. 5, a method performed by a user equipment in a wireless communication system according to an embodiment of the present disclosure includes a step S510 of receiving configuration information related to channel state information (CSI), a step S520 of receiving a downlink reference signal (DL RS), a step S530 of calculating CSI, and a step S540 of reporting the CSI.

In the step S510, the UE receives configuration information related to channel state information (CSI) from a base station. The configuration information may include information based on the method 1 and/or the method 2 described above.

According to an embodiment, the configuration information may include information related to a first set of beams.

Specifically, the configuration information may include at least one of the following 1) to 6).
1) ID information for beams (e.g., information including at least one of IDs of first DL RSs related to a first set of beams and/or IDs of second DL RSs related to a second set of beams)
2) Transmission periodicity and time/frequency location information of DL RS(s) (e.g., first DL RS(s) and/or second DL RS(s))
3) Sequence information related to DL RS(s) (e.g., first DL RS(s) and/or second DL RS(s))
3) Information on a relation between RSs (e.g. QCL information (QCL type-D) configured between first DL RS(s) and second DL RS(s) or QCL information (QCL type-D) configured between antenna port(s) of first DL RS(s) and antenna port(s) of second DL RS(s))
4) Beam angle information (e.g., absolute/relative information, boresight direction, boresight angle (azimuth/zenith) of beams related to a first set and/or a second set)
5) Beam width information (e.g., 3dB beam width)
6) Beam grid information (e.g., information related to beam grid of the method 2)

For example, the configuration information may include angle information related to the first set of beams. The angle information related to the first set of beams may be based on 4) the beam angle information. The angle information related to the first set of beams may include angle information based on the assistance information of Table 5 above.

For example, the configuration information may include coordinate information related to the first set of beams. The coordinate information may be based on 6) the beam grid information. The coordinate information may include coordinates of the first DL RSs within a beam grid. The second DL RSs (related to the second set of beams) may be related to beams that can be represented based on the beam grid. That is, the second set of beams may be based on the beams that can be represented based on the beam grid.

According to an embodiment, the configuration information may be based on configuration information related to existing CSI.

The configuration information may include at least one of i) CSI-interference management (IM) resource related information, ii) CSI measurement configuration related information, iii) CSI resource configuration related information, iv) CSI-RS resource related information, or v) CSI report configuration related information. For example, at least one of the i) to v) may include information for at least one of the 1) to 6). For example, the CSI resource configuration related information (e.g., CSI-ResourceConfig IE of Table 1) may include ID information for the beams and/or the beam grid information.

The first set may be based on Set B of Table 5 above, and the second set may be based on Set A of Table 5 above.

For example, the second DL RSs related to the second set of beams may include the first DL RSs. That is, the first DL RSs may be based on a subset of the second DL RSs (Alt.1 of Table 5 above).

For example, the second DL RSs related to the second set of beams may be different from the first DL RSs. The first set of beams may be different from the second set of beams. The first DL RSs and the second DL RSs may be based on different beams (Alt.2 of Table 5 above).

According to an embodiment, a beam width related to the second set of beams may be narrower than a beam width related to the first set of beams. The first set may include beams with a wide beam width, and the second set may include beams with a narrow beam width.

According to an embodiment, a quasi co-location (QCL) relationship may be configured between the first DL RSs and the second DL RSs. The QCL relationship may be configured by qcl-Type.

For example, the antenna ports of the first DL RSs may be QCLed (quasi co-located) with the second DL RSs with respect to the qcl-Type. For example, the antenna ports of the second DL RSs may be QCLed with the first DL RSs with respect to the qcl-Type.

The qcl-Type may be configured as TypeD (Spatial Rx parameter).

Information related to the QCL relationship may be included in the configuration information related to the CSI (e.g., the information on the relation between the RSs). For example, the information related to the QCL relationship may include QCL information related to the respective first DL RSs. The QCL information related to the respective first DL RSs may include ID of at least one second DL RS. The QCL information related to the respective first DL RSs may further include information on the qcl-Type (if the qcl-Type is configured for each first DL RS).

In the step S520, the UE receives at least one downlink reference signal (DL RS) from the base station.

The at least one DL RS may be based on synchronization signal/physical broadcast channel block (SS/PBCH block) (SSB) and/or channel state information-reference signal (CSI-RS).

According to an embodiment, the at least one DL RS may be based on the first DL RSs related to the first set of beams. The first set may be based on the Set B of Table 5 above.

In the step S530, the UE calculates the CSI based on a measurement for the at least one DL RS.

Parameter(s) included in the CSI may be determined/calculated based on the measurement for the at least one DL RS. The parameter(s) included in the CSI may be parameter(s) based on 'reportquantity'.

For example, the 'reportquantity' may be set to cri-RI-PMI-CQI, cri-RI-i1, cri-RI-i1-CQI, cri-RI-CQI, cri-RSRP, ssb-Index-RSRP, or cri-RI-LI-PMI-CQI.

Based on the 'reportquantity', the CSI may include at least one of a channel quality indicator (CQI), a precoding matrix indicator (PMI), a CSI-RS Resource Indicator (CRI), an SSB Resource block Indicator (SSBRI), a layer indicator (LI), a rank indicator (RI), a Layer 1-reference signal received power (L1-RSRP), or a Layer 1-signal to noise and interference ratio (L1-SINR).

In the step S540, the UE reports the CSI to the base station. The CSI may be reported based on CSI report configuration (CSI-reportConfig IE). The CSI may be reported periodically, semi-persistently or aperiodically.

The CSI may be transmitted on a physical uplink control channel (PUCCH) or a physical uplink shared channel (PUSCH).

The periodic CSI reporting is performed on a short PUCCH or a long PUCCH. The semi-persistent (SP) CSI reporting is performed on the short PUCCH, the long PUCCH, or the PUSCH. The aperiodic CSI reporting is performed on the PUSCH and is triggered by DCI. In this case, information related to a trigger of the aperiodic CSI reporting may be transmitted/indicated/configured via MAC-CE.

The CSI may include information based on the method 1 and/or the method 2. The CSI may include information related to the second set of beam(s) estimated/determined based on an AI/ML model of the UE. For example, an input of the AI/ML model may be information based on the measurement for the at least one DL RS (e.g., L1-RSRP(s) related to the first set of beams and/or L1-SINR(s) related to the first set of beams). An output of the AI/ML model may be information related to the second set of beam(s) (e.g., RS ID(s) related to the second set of beam(s), linear combination coefficient(s) related to the second set of beam(s), coordinate information(s) related to the second set of beam(s), RSRP(s) related to the second set of beam(s), and/or SINR(s) related to the second set of beam(s)).

According to an embodiment, the CSI may include information related to at least one beam in the second set related to the first set.

For example, the CSI may include information (reporting parameter) based on the method 1. The CSI may include information on N1 beam(s) (e.g., at least one beam of the second set of beams). Specifically, the CSI may include information for at least one of i) one or more first DL RSs of the first DL RSs, ii) one or more linear combination coefficients related to the one or more first DL RSs, and/or iii) one or more beam quality values (e.g., L1-RSRP(s) and/or L1-SINR(s)) related to the one or more first DL RSs.

For example, the CSI may include information based on the method 2. The CSI may include coordinate information related to at least one beam in the second set. Specifically, the CSI may include information for at least one of i) one or more coordinates related to one or more second DL RSs of the second DL RSs and/or ii) one or more beam quality values (e.g., L1-RSRP(s) and/or L1-SINR(s)) related to the one or more second DL RSs. In the CSI, payload sizes (e.g., the number of bits) for the respective one or more second DL RSs may be different. This is described in detail below.

If coordinate information related to each of the one or more second DL RSs included in the CSI is a value expressed based on an entire range of the beam grid, the CSI may not include the coordinate information related to the one or more second DL RSs. In other words, the coordinate information related to the one or more second DL RSs may be greater than a payload of the CSI limited. The following embodiment may be considered to solve the problem.

A payload size for each of the one or more second DL RSs (e.g., the number of bits for the coordinate information or the coordinate information + the number of bits for the beam quality value) may be related to a coordinate range determined based on the order of the one or more beam quality values.

A coordinate range determined for a specific second DL RS among the one or more second DL RSs may be i) an entire coordinate range of the beam grid or ii) a range determined based on coordinates related to a second DL RS that is prior to the specific second DL RS in the order of beam quality values. This is described in detail with examples below.

If the beam quality of the specific second DL RS is the best (the order of beam quality values is first), the determined coordinate range may be the entire coordinate range of the beam grid.

If the beam quality of the specific second DL RS is the second best (the order of the beam quality values is second), the determined coordinate range may be a range determined based on coordinates of a second DL RS in which the order of beam quality values is first. The range determined based on the coordinates of the second DL RS in which the order of beam quality values is first may be a part of the entire coordinate range of the beam grid. The part of the entire coordinate range of the beam grid may be a range including the coordinates of the second DL RS in which the order of beam quality values is first. The part of the entire coordinate range of the beam grid may be a range excluding the coordinates of the second DL RS in which the order of beam quality values is first.

The operation based on the above-described steps S510 to S540 and the SSB receiving step can be implemented by a device of FIG. 7. For example, a UE 200 may control one or more transceivers 230 and/or one or more memories 240 to perform the operation based on the steps S510 to S540.

Below, the above-described embodiments are described in detail from a perspective of base station operation.

Steps S610 to S630 described below correspond to the steps S510 to S540 described with reference to FIG. 5. Considering the above correspondence, redundant description is omitted. That is, the detailed description of the base station operation described below can be replaced with the description/embodiment of FIG. 5 corresponding to the base station operation. For example, the description/embodiment of the steps S510 and S520 in FIG. 5 may be additionally applied to the base station operation of the steps S610 and S620 described below. For example, the description/embodiment of the steps S530 and S540 in FIG. 5 may be additionally applied to the base station operation of the step S630 described below.

FIG. 6 is a flow chart illustrating a method performed by a base station according to another embodiment of the present disclosure.

Referring to FIG. 6, a method performed by a base station in a wireless communication system according to another embodiment of the present disclosure includes a step S610 of transmitting configuration information related to channel state information (CSI), a step S620 of transmitting a downlink reference signal (DL RS), and a step S630 of receiving the CSI.

In the step S610, the base station transmits configuration information related to channel state information (CSI) to a UE.

In the step S620, the base station transmits at least one downlink reference signal (DL RS) to the UE.

In the step S630, the base station receives the CSI from the UE.

The operation based on the above-described steps S610 to S630 can be implemented by a device of FIG. 7. For example, a base station 100 may control one or more transceivers 230 and/or one or more memories 240 to perform the operation based on the steps S610 to S630.

A device to which an embodiment of the present disclosure is applicable (a device implementing the method/operation according to an embodiment of the present disclosure) is described below with reference to FIG. 7.

FIG. 7 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method performed by a user equipment in a wireless communication system, the method comprising:
receiving configuration information related to channel state information (CSI);
receiving at least one downlink reference signal (DL RS);
calculating the CSI based on a measurement for the at least one DL RS; and
reporting the CSI,
wherein the configuration information includes information related to a first set of beams,
wherein the at least one DL RS is based on first DL RSs related to the first set of beams, and
wherein the CSI includes information related to at least one beam in a second set related to the first set.

2. The method of claim 1, wherein second DL RSs related to the second set of beams include the first DL RSs.

3. The method of claim 1, wherein second DL RSs related to the second set of beams are different from the first DL RSs.

4. The method of claim 3, wherein a beam width related to the second set of beams is narrower than a beam width related to the first set of beams.

5. The method of claim 3, wherein a quasi co-location (QCL) relationship is configured between the second DL RSs and the first DL RSs.

6. The method of claim 1, wherein the configuration information includes angle information related to the first set of beams.

7. The method of claim 1, wherein the CSI includes information for at least one of i) one or more first DL RSs of the first DL RSs, ii) one or more linear combination coefficients related to the one or more first DL RSs, and/or iii) one or more beam quality values related to the one or more first DL RSs.

8. The method of claim 1, wherein the configuration information includes coordinate information related to the first set of beams, and
wherein the coordinate information includes coordinates of the first DL RSs within a beam grid.

9. The method of claim 8, wherein second DL RSs related to the second set of beams are related to beams that are able to be represented based on the beam grid.

10. The method of claim 9, wherein the CSI includes information for at least one of i) one or more coordinates related to one or more second DL RSs of the second DL RSs and/or ii) one or more beam quality values related to the one or more second DL RSs.

11. The method of claim 10, wherein in the CSI, a payload size for each of the one or more second DL RSs is different, and
wherein the payload size for each of the one or more second DL RSs is related to a coordinate range determined based on an order of the one or more beam quality values.

12. The method of claim 11, wherein a coordinate range determined for a specific second DL RS among the one or more second DL RSs is i) an entire coordinate range of the beam grid or ii) a range determined based on a coordinate related to a second DL RS that is prior to the specific second DL RS in the order of the one or more beam quality values.

13. A user equipment operating in a wireless communication system, the user equipment comprising:
one or more transceivers;
one or more processors; and
one or more memories operably connectable to the one or more processors and storing instructions that configure the one or more processors to perform operations based on being executed by the one or more processors,
wherein the operations comprise:
receiving configuration information related to channel state information (CSI);
receiving at least one downlink reference signal (DL RS);
calculating the CSI based on a measurement for the at least one DL RS; and
reporting the CSI,
wherein the configuration information includes information related to a first set of beams,
wherein the at least one DL RS is based on first DL RSs related to the first set of beams, and
wherein the CSI includes information related to at least one beam in a second set related to the first set.

14. A device comprising:
one or more memories; and
one or more processors operably connected to the one or more memories,
wherein the one or more memories include instructions that configure the one or more processors to perform operations based on being executed by the one or more processors,
wherein the operations comprise:
receiving configuration information related to channel state information (CSI);
receiving at least one downlink reference signal (DL RS);
calculating the CSI based on a measurement for the at least one DL RS; and
reporting the CSI,
wherein the configuration information includes information related to a first set of beams,
wherein the at least one DL RS is based on first DL RSs related to the first set of beams, and
wherein the CSI includes information related to at least one beam in a second set related to the first set.

15. One or more non-transitory computer readable mediums storing one or more instructions,
wherein the one or more instructions executable by one or more processors configure the one or more processors to perform operations,
wherein the operations comprise:
receiving configuration information related to channel state information (CSI);
receiving at least one downlink reference signal (DL RS);
calculating the CSI based on a measurement for the at least one DL RS; and
reporting the CSI,
wherein the configuration information includes information related to a first set of beams,
wherein the at least one DL RS is based on first DL RSs related to the first set of beams, and
wherein the CSI includes information related to at least one beam in a second set related to the first set.

16. A method performed by a base station in a wireless communication system, the method comprising:
transmitting configuration information related to channel state information (CSI);
transmitting at least one downlink reference signal (DL RS); and
receiving the CSI,
wherein the CSI is calculated based on a measurement for the at least one DL RS,
wherein the configuration information includes information related to a first set of beams,
wherein the at least one DL RS is based on first DL RSs related to the first set of beams, and
wherein the CSI includes information related to at least one beam in a second set related to the first set.

17. A base station operating in a wireless communication system, the base station comprising:
one or more transceivers;
one or more processors; and
one or more memories operably connectable to the one or more processors and storing instructions that configure the one or more processors to perform operations based on being executed by the one or more processors,
wherein the operations comprise:
transmitting configuration information related to channel state information (CSI);
transmitting at least one downlink reference signal (DL RS); and
receiving the CSI,
wherein the CSI is calculated based on a measurement for the at least one DL RS,
wherein the configuration information includes information related to a first set of beams,
wherein the at least one DL RS is based on first DL RSs related to the first set of beams, and
wherein the CSI includes information related to at least one beam in a second set related to the first set.
